# FASCICULE DE BREVET EUROPEEN

(11) **EP 2 630 420 B1**
(45) Date de publication et mention de la délivrance du brevet: **17.12.2014**
(21) Numéro de dépôt: 11779748.0
(22) Date de dépôt: 20.10.2011
(51) Int. Cl.: F25B 15/04, F25B 33/00, F25B 35/04, F25B 17/08

(54) **SYSTÈME THERMOCHIMIQUE À CONNEXION MODULAIRE**
THERMOCHEMISCHES SYSTEM MIT EINEM MODULAREN ANSCHLUSS
THERMOCHEMICAL SYSTEM HAVING A MODULAR CONNECTION

(30) Priorité: 20.10.2010 FR 1004119; 20.10.2010 FR 1004118
(43) Date de publication de la demande: 28.08.2013
(73) Titulaire: Coldway, 66380 Pia (FR)
(72) Inventeur: RIGAUD, Laurent, F-66570 Saint Nazaire (FR); KINDBEITER, Francis, F-66200 Corneilla Del Vercor (FR); DUTRUY, Laurent, F66180 Villeneuve de la Raho (FR)
(74) Mandataire: Louiset, Raphael
(86) Numéro de dépôt international: PCT/FR2011/000565
(87) Numéro de publication internationale: WO 2012/052634

(56) Documents cités:
- EP-A1- 0 015 106
- WO-A1-97/14004
- FR-A- 1 029 877
- FR-A1- 2 736 421

## Description

La présente invention concerne des perfectionnements aux systèmes thermochimiques du type destinés à être notamment utilisés dans des appareils de réfrigération et/ou de chauffage, ainsi que dans des systèmes de stockage de gaz sous forme de sels.

On connaît de tels systèmes qui exploitent les propriétés d'une réaction thermochimique réversible et fortement exothermique au cours de laquelle un produit réactif, tel que des sels et notamment du chlorure de calcium ou du chlorure de baryum, absorbe un gaz approprié, tel que notamment de l'ammoniac. Le caractère réversible de cette réaction permet, une fois celle-ci terminée, de récupérer le gaz initial par chauffage des sels, de sorte que le cycle peut se répéter.

Cette propriété, ainsi qu'exposé dans le brevet FR 2 873 793, a été exploitée dans des systèmes de production de froid dans lesquels le système thermochimique est mis en communication contrôlée avec un réservoir contenant le gaz sous phase liquide. Lorsque les deux enceintes sont mises en communication, le gaz liquide contenu dans le réservoir se vaporise, ce qui absorbe une certaine quantité de chaleur, si bien que le réservoir se refroidit, et ce gaz est absorbé par le produit réactif générant ainsi la susdite réaction chimique, si bien que le réacteur est la source d'un dégagement de chaleur. Une fois la réaction terminée, si l'on réchauffe le produit contenu dans le réacteur, on libère le gaz absorbé dans le produit réactif et celui-ci se condense alors dans le réservoir.

On peut également utiliser le présent système pour assurer le stockage du gaz mis en oeuvre dans la susdite réaction thermochimique.

Sur le plan pratique, les systèmes thermochimiques comprennent un réacteur qui contient le produit réactif au sein duquel on amène le gaz au moyen d'un élément, appelé ci-après diffuseur.

Un tel diffuseur est en mesure d'assurer plusieurs fonctions, à savoir de première part réaliser une diffusion homogène du gaz dans la masse du produit réactif, et de seconde part de faire en sorte que cette diffusion ait une direction axiale. On a en effet constaté que le chauffage du produit réactif était plus homogène lorsque les lignes de courant du chauffage étaient radiales, c'est-à-dire lorsqu'elles allaient du centre vers la périphérie du réacteur.

Les réacteurs doivent de plus comporter des moyens de filtrage afin d'empêcher que, lors de la mise en communication du réacteur avec le réservoir, de petites particules de produit réactif ne soient aspirées et viennent obturer le circuit de commande. Ces moyens de filtrage sont habituellement constitués d'un ou plusieurs éléments filtrants, par exemple en acier inoxydable, dont la porosité est telle qu'elle empêche le passage des particules de produit réactif dans le circuit de gaz.

Les réacteurs doivent enfin être pourvus de moyens de chauffage du produit contenu dans le réacteur après que le produit réactif a absorbé le gaz, de façon à être en mesure d'activer la réaction thermochimique inverse.

Il en résulte que la réalisation d'un réacteur, en raison des multiples dispositifs et connexions qui sont rendues nécessaires par les différentes fonctions dont on souhaite le doter, est une opération complexe et onéreuse. FR-A-2 736 421 décrit un sytème thermochimique selon le préambule de la revendication 1.

La présente invention a pour but de remédier à de tels inconvénients en proposant un système thermochimique dont la fabrication soit telle qu'elle permette de diminuer le temps de fabrication et de montage du réacteur et qui, de plus, notamment dans une variante de l'invention, autorise une mise en place centralisée et simultanée des différents moyens permettant de mettre en oeuvre les diverses fonctions assurées par le réacteur, à savoir alimentation en gaz, distribution de celui-ci dans le produit réactif, filtration et chauffage.

La présente invention a ainsi pour objet un système thermochimique du type comportant un réacteur, ou enceinte de stockage d'un produit réactif apte à absorber un gaz, qui est admis dans le réacteur par un diffuseur disposé suivant l'axe longitudinal de celui-ci, le produit réactif et le gaz étant tels que, lorsqu'ils sont mis en présence l'un de l'autre ils sont l'objet d'une réaction chimique ayant pour effet l'absorption du gaz par le produit réactif et, à l'inverse, ils sont l'objet d'une réaction chimique inverse de désorption du gaz absorbé par le produit réactif sous l'effet d'un chauffage appliqué à ce dernier lorsqu'il a absorbé du gaz, caractérisé en ce que le diffuseur comprend des moyens d'alimentation en gaz, des moyens de distribution du gaz dans le produit réactif, des moyens de filtration, et des moyens de chauffage, ces différents moyens formant un sous-ensemble qui est fixé sur l'enveloppe du réacteur par un élément obturateur.

Préférentiellement la forme et le volume dudit sous-ensemble seront tels qu'il sera apte à être introduit dans le réacteur par un orifice qui est obturable par l'élément obturateur, une fois l'introduction effectuée.

Ce sous-ensemble pourra avoir une forme globale cylindrique et le diamètre maximal des différents moyens constituant le sous-ensemble pourra être inférieur à celui de l'élément obturateur.

Le sous-ensemble pourra être fixé de façon amovible sur le réacteur, notamment par des moyens de vissage.

Par ailleurs les moyens de chauffage pourront être constitués par les moyens de distribution du diffuseur. Dans un tel mode de mise en oeuvre, les moyens de distribution du diffuseur formant les moyens de chauffage pourront être constitués d'un élément filaire rigide chauffant spiralé, notamment en acier inoxydable, qui sera alimenté en gaz à l'une de ses extrémités par une tubulure d'arrivée de gaz.

L'extrémité alimentée en gaz de l'élément filaire pourra être solidarisée de la tubulure d'alimentation en gaz, notamment par soudure ou par un emmanchement à force.

Les moyens de chauffage pourront être constitués d'au moins une résistance, notamment enroulée de façon sensiblement hélicoïdale sur les moyens de distribution du diffuseur.

Ces derniers pourront être recouverts d'au moins un élément filtrant, notamment en acier inoxydable. Préférentiellement au moins un élément filtrant aura des mailles dont la taille sera de l'ordre de la dizaine de micromètres. Au moins l'un des éléments filtrants pourra avoir des mailles dont la taille sera de l'ordre de la centaine de micromètres. Suivant l'invention la résistance pourra être disposée sur ledit élément filtrant.

Préférentiellement les moyens filtrant envelopperont complètement les moyens de distribution du gaz de façon à éviter que des micro-particules du produit réactif ne viennent obturer le circuit de gaz.

Par ailleurs l'enveloppe pourra être faite de métal et notamment d'acier inoxydable, mais elle pourra également être constituée de matériaux composites. Sa surface interne pourra être doublée d'une seconde enceinte, ou « liner » contenant le produit réactif.

Dans une application de type « fermé » le système thermochimique pourra comporter des moyens de mise en communication contrôlée du réacteur avec un réservoir contenant ledit gaz sous forme liquéfiée.

On décrira ci-après, à titre d'exemple non limitatif, une forme d'exécution de la présente invention, en référence au dessin annexé sur lequel :
- la figure 1 est une vue schématique avec coupe partielle du réacteur, illustrant le principe de fonctionnement d'un système thermochimique suivant l'invention dans une application de type dit « ouvert »,
- la figure 2a est une vue schématique en coupe longitudinale et diamétrale d'un premier mode de réalisation d'un réacteur mis en oeuvre dans le système thermochimique suivant l'invention,
- la figure 2b est une vue partielle agrandie d'un diffuseur représenté sur la figure 2a,
- la figure 3 est une vue partielle agrandie d'une variante de mise en oeuvre du diffuseur représenté sur la figure 2b,
- la figure 4 est une vue schématique avec coupe partielle du réacteur, illustrant le principe de fonctionnement d'un système thermochimique suivant l'invention dans une application de type dit « fermé »,
- la figure 5 est une vue schématique illustrant un mode de fabrication d'une variante d'un réacteur mis en oeuvre dans un système thermochimique suivant l'invention,
- les figure 6 à 8 sont des vues partielles en coupe longitudinale et diamétrale de trois variantes de réalisation de l'invention,

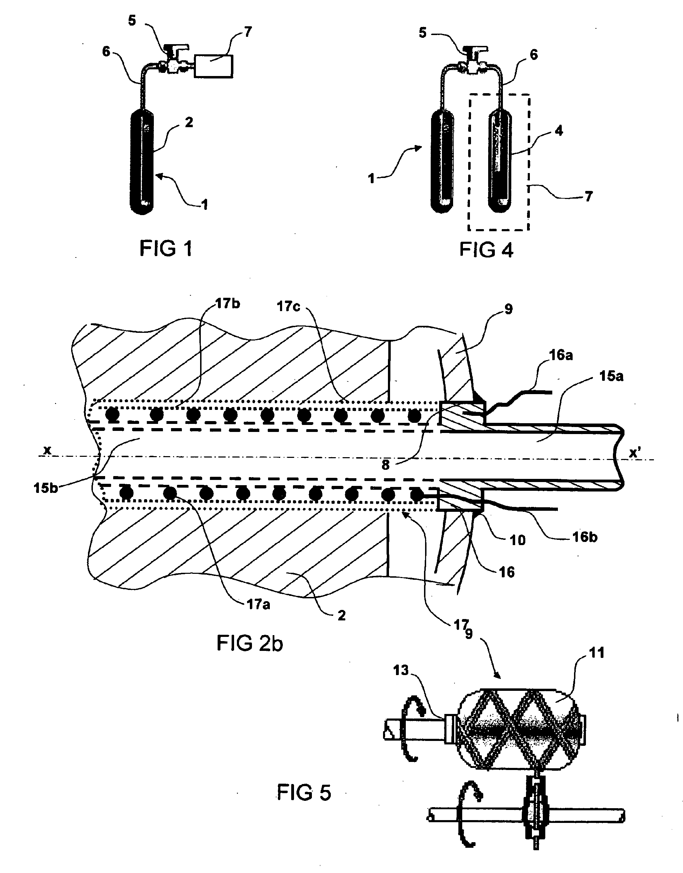

Dans un premier mode de mise en oeuvre de l'invention, le système thermochimique qui est représenté de façon schématique sur la figure 1, comprend essentiellement un réacteur 1 qui contient un produit réactif 2 et qui est en communication par une conduite 6 sous le contrôle d'une vanne de commande 5 avec des moyens d'utilisation extérieurs 7. Ainsi qu'expliqué ci-après et de façon connue, le produit réactif et le gaz spécifique sont tels que le produit réactif est apte, par une réaction thermochimique exothermique, à absorber le gaz et à le restituer ensuite, par une réaction thermochimique inverse, lorsque l'on chauffe le produit réactif 2.

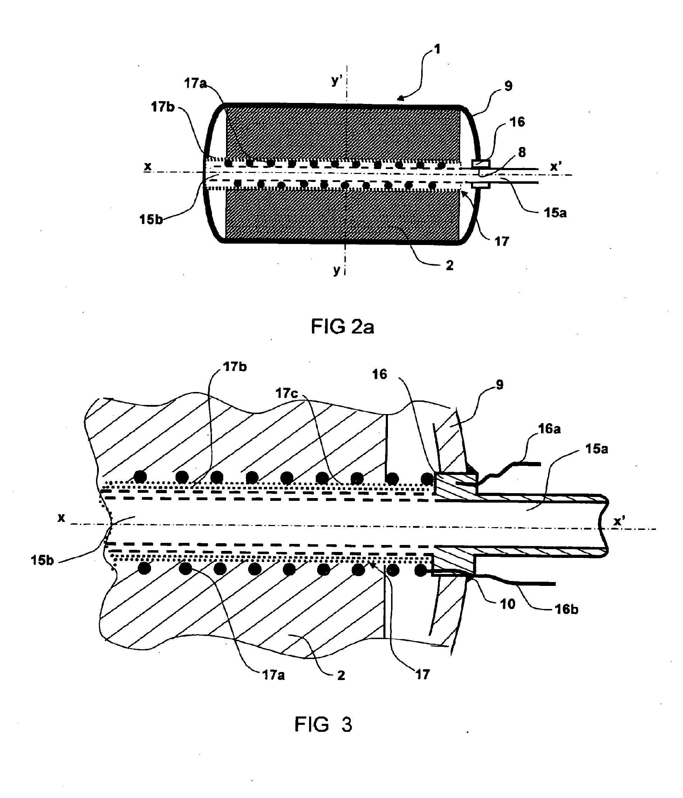

Dans le présent mode de mise en oeuvre de l'invention qui est représenté sur les figures 2a et 2b, le réacteur 1 comprend une enveloppe externe cylindrique 9 qui se termine préférentiellement à chacune de ses extrémités par une partie sensiblement hémisphérique.

De façon connue, le produit réactif 2 qui est contenu dans le réacteur 1 est, par exemple, du chlorure de calcium qui a été préférentiellement mélangé à des granulats inertes, par exemple constitués de graphite naturel expansé (GNE) de façon à augmenter la perméabilité du produit réactif et favoriser ainsi la diffusion du gaz au sein de celui-ci. Une fois le mélange effectué, il est compacté préférentiellement dans le sens longitudinal xx' du réacteur 1.

L'une des extrémités du réacteur 1 est percée d'un orifice 8 destiné à recevoir un élément obturateur 16 constitué en l'espèce d'un bossage d'un diffuseur 17. Ce dernier comporte ainsi une tubulure d'entrée/sortie de gaz 15a qui est reliée aux moyens d'utilisation 7, et qui se prolonge par l'élément obturateur 16 de plus grand diamètre destiné à prendre place dans l'orifice 8 et à assurer la fixation du diffuseur, par exemple par une soudure 10 sur l'enveloppe 9 du réacteur 1. Le diffuseur 17 se prolonge à l'intérieur du réacteur 1 sur toute la longueur de son enveloppe 9, par une partie tubulaire 15b qui est perforée de façon que sa porosité soit comprise entre 10 et 90%.

La partie tubulaire 15b a pour première fonction de favoriser une diffusion régulière du gaz sur toute la longueur et dans la masse du produit réactif 2. Elle a également une seconde fonction qui est d'assurer cette diffusion du gaz dans le produit réactif suivant un trajet radial. On a constaté en effet que la perméabilité du produit réactif 2 était optimale dans une telle direction, dans la mesure où celle-ci est perpendiculaire à la direction du compactage xx'. Dans le présent mode de mise en oeuvre de l'invention la partie tubulaire 15b du diffuseur 17 assure de plus une fonction de chauffage.

A cet effet un fil chauffant 17a, préférentiellement en acier inoxydable, est enroulé sur la partie perforée 15b du diffuseur et ses fils d'alimentation électrique 16a et 16b traversent l'élément obturateur 16 pour aller vers une alimentation électrique externe non représentée sur le dessin.

Le fil chauffant 17a est recouvert par un manchon cylindrique 17b, notamment en acier inoxydable dont la dimension des mailles est préférentiellement de l'ordre de la dizaine de micromètres. Eventuellement cet ensemble est lui-même glissé dans un second manchon cylindrique 17c réalisé en mailles d'acier inoxydable de plus grande porosité et dont les dimensions des mailles sont préférentiellement de l'ordre de la centaine de micromètres. Les deux manchons 17b et 17c viennent en appui contre l'élément obturateur 16 par l'une de leurs extrémités et, par leur autre extrémité, ils viennent en contact avec le fond du réacteur, de façon à isoler l'arrivée/sortie de gaz du produit réactif 2 et éviter que des microparticules de celui-ci ne viennent obturer les éléments de commande 5. On fera en sorte que le diamètre du second manchon 17c soit inférieur à celui de l'élément obturateur 16 de façon qu'il puisse pénétrer à l'intérieur du réacteur par l'orifice 8.

Suivant l'invention on constitue ainsi un diffuseur 17 qui forme un sous-ensemble comprenant tous les éléments permettant de réaliser les diverses fonctions énumérées précédemment, à savoir l'alimentation en gaz, la distribution la filtration, et le chauffage du produit réactif, ce sous-ensemble venant ensuite se fixer sur l'enveloppe 9 au moyen de l'élément obturateur 16 une fois le produit réactif 2 mis en place dans le réacteur. On comprend que le montage du réacteur est grandement simplifié dans la mesure où tous les éléments constituant le sous-ensemble diffuseur peuvent être pré-assemblés et mis en place de façon centralisée et simultanée autrement dit par une manipulation unique.

On pourrait également, ainsi que représenté sur la figure 3, disposer le fil chauffant 17a sur l'extérieur du sous-ensemble, à savoir sur le second élément filtrant 17c.

Le système thermochimique suivant l'invention, qui est représenté sur la figure 1 peut être utilisé pour assurer plusieurs fonctions débouchant sur des applications techniques diverses.

Ainsi, lorsque les moyens d'utilisation 7 sont constitués d'une source de gaz, on peut utiliser le système thermochimique pour assurer le stockage de celui-ci. Une telle fonction ouvre sur plusieurs applications.

On peut en effet utiliser le réacteur pour absorber un gaz que l'on souhaite éliminer, notamment un gaz nocif que, dans un premier temps, on stocke dans le réacteur afin, dans un deuxième temps, de venir le capter avec des moyens appropriés.

On peut également utiliser le réacteur pour stocker un gaz dont on souhaite assurer la distribution pour une application déterminée.

Une application particulièrement intéressante est celle dans laquelle le système thermochimique est utilisé pour la production de chaleur et de froid. Dans cette application, connue en elle-même, qui est représentée de façon schématique sur la figure 4, les moyens d'utilisation extérieurs 7 sont constitués d'un réservoir 4 qui contient un gaz liquide apte à réagir avec le produit réactif 2 et qui est stocké en phase liquide.

De façon connue, le fonctionnement du système s'établit ainsi que décrit ci-après. A l'ouverture de la vanne de commande 5 le gaz stocké sous phase liquide dans le réservoir 4 se vaporise, absorbant ainsi de la chaleur, si bien que le réservoir 4 se refroidit, et le gaz généré est distribué par l'ensemble diffuseur 17 au sein du produit réactif 2 qui le capte suivant la réaction thermochimique spécifique fonction du produit réactif et du gaz utilisé ; cette réaction étant exothermique, si bien que le réacteur 1 s'échauffe. La réaction se poursuit tant qu'il reste du gaz dans le réservoir 4 et que le produit réactif n'est pas saturé. Si par la suite on effectue un apport de chaleur au réacteur 1 à l'aide de moyens de chauffage notamment constitués par le fil chauffant 17a, le produit réactif désorbe le gaz qui retourne au réservoir 4 où il se condense.

A titre d'exemple, dans le cas d'un produit réactif constitué de chlorure de calcium et d'un gaz constitué d'ammoniac, cette réaction thermochimique est la suivante :

Ca (NH₃)₆Cl₂ <->Ca (NH₃)₂Cl₂+4(NH₃)-δH_{R}

On comprend qu'un tel système est particulièrement intéressant dans la mesure où il permet de stocker de façon potentielle à la fois de la chaleur (échauffement du réacteur 1) et du froid (refroidissement du réservoir 4) et ceci avec un poids et sous un encombrement faible.

L'enveloppe 9 du réacteur 1 peut être constituée d'un autre matériau que l'acier ou l'acier inoxydable. Dans le cadre de la présente invention cette enveloppe peut être également constituée d'un matériau composite notamment formé d'un réseau tissé de fibres de carbone, de fibres de verre ou d'une matière de synthèse telle que notamment le kevlar etc ..., qui est noyé dans une résine thermodurcissable ou thermoplastique telle que, par exemple, une résine époxy, une résine polyester ou polyamide.

Dans un tel mode de mise en oeuvre, la face interne de l'enveloppe externe du réacteur 1 est en contact avec une seconde enveloppe, ou enveloppe interne 11 dite « liner », qui présente la caractéristique d'être étanche.

Cette enveloppe peut être métallique et être constituée d'acier, d'acier inoxydable, d'aluminium ou d'une matière de synthèse telle que du polyéthylène du polyamide etc ...

Lorsque cette enveloppe est métallique elle aura alors une faible épaisseur, inférieure à 1 mm. Sa qualité et sa fonction essentielle seront d'assurer une étanchéité parfaite du réacteur aussi bien à l'égard des gaz qu'à l'égard des liquides utilisés.

La fonction de l'enveloppe composite externe est quant à elle de conférer au réacteur une bonne résistance mécanique et, à cet effet, l'homme du métier saura choisir la nature des fibres et celle de la résine à utiliser ainsi que l'épaisseur à donner aux parois de l'enveloppe.

Dans un mode de mise en oeuvre d'une telle réalisation, représentée de façon schématique sur la figure 5, on pourra utiliser le liner 11 en tant que mandrin pour la réalisation de l'enveloppe externe 9. Ainsi on pourra venir dérouler les fibres de carbone sur la surface externe du liner 11 mis en rotation, de façon à tisser sur celui-ci une sorte d'écheveau qui sera ensuite, ou simultanément au déroulement, noyé dans la résine.

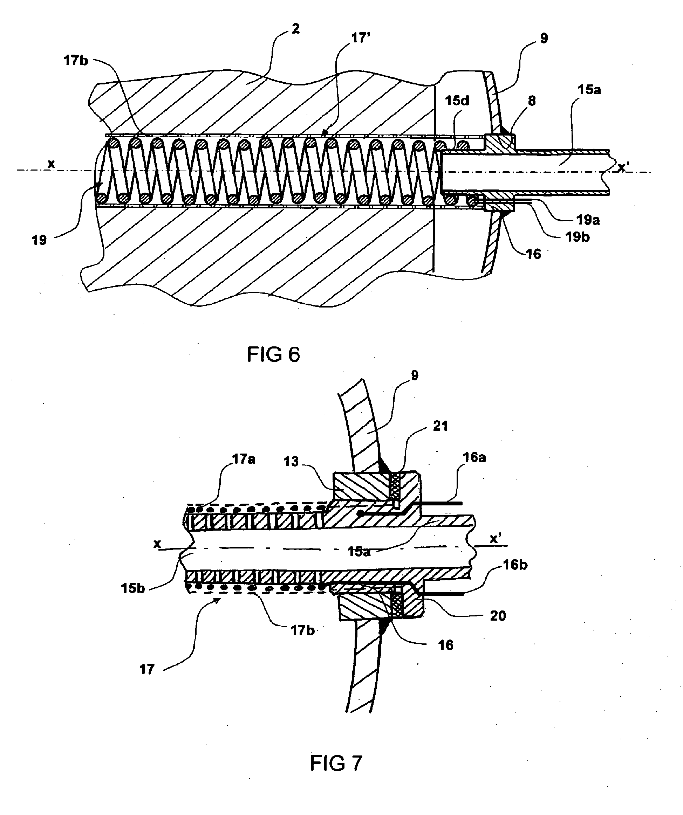

On peut également, ainsi que représenté sur la figure 6, réaliser un diffuseur 17' formant un sous-ensemble suivant l'invention qui comprend un fil chauffant spiralé 19, alimenté en courant électrique par des fils 19a et 19b qui traversent l'élément obturateur 16 et dont la rigidité est telle qu'elle lui permet de s'emmancher à force sur un tronçon 15d de la tubulure 15a d'arrivée/sortie de gaz et de traverser le produit réactif 2 de part en part sur toute la longueur de celui-ci. Avantageusement le fil chauffant spiralé rigide 19 est recouvert d'un manchon filtre 17b, notamment en acier inoxydable, dont la porosité est préférentiellement de l'ordre de la dizaine de micromètres qui est fixé, par exemple par une soudure par point, sur celui-ci. Eventuellement l'ensemble est recouvert d'un second manchon filtre de plus grande porosité, non représenté sur le dessin, dont la valeur est préférentiellement de l'ordre de la centaine de micromètres. On constitue ainsi l'ensemble diffuseur 17'.

Bien entendu le diamètre de l'élément obturateur 16 qui vient prendre place dans l'orifice 8 est supérieur à celui du manchon 17c de façon que le sous-ensemble diffuseur puisse être introduit dans le réacteur.

Dans le présent mode de mise en oeuvre de l'invention la porosité du diffuseur, qui sera préférentiellement comprise entre 10 et 90%, sera formée de l'espace compris entre les spires du fil chauffant 19, si bien que pour ajuster celle-ci il suffira de faire varier le pas de l'enroulement de ce dernier en étirant plus ou moins le fil spiralé rigide.

Dans une variante de mise en oeuvre de la présente invention, qui est représentée sur la figure 7, le diffuseur 17 est monté de façon amovible sur l'enveloppe 9 du réacteur 1. A cet effet cette dernière comporte une embase 13 qui est percée d'un trou fileté qui est destiné à recevoir l'élément obturateur 16 qui est pourvu à cette fin d'un filetage complémentaire. L'élément obturateur 16 se termine côté extérieur par un méplat 20 qui vient en appui contre la face externe de l'embase 13 avec interposition d'un joint d'étanchéité 21. Il est ainsi possible, par exemple après un temps donné d'utilisation, de démonter le diffuseur 17 pour le nettoyer ou échanger un de ses éléments contre un nouveau diffuseur plus performant.

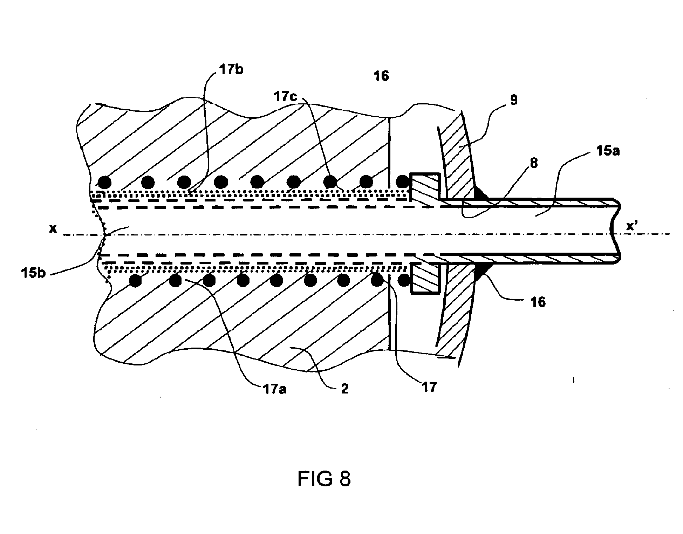

Dans une variante de mise en oeuvre de la présente invention qui est représentée sur la figure 8, le sous-ensemble comprenant les moyens d'alimentation en gaz, les moyens de distribution du gaz, les moyens de filtration et les moyens de chauffage, sont introduits dans le réacteur à partir du fond de celui-ci, à savoir la paroi de l'enveloppe 9 (non représentée sur le dessin) opposée à la paroi dans laquelle débouche, par l'orifice 8, la tubulure d'entrée/sortie de gaz 15a. Dans un tel mode de mise en oeuvre l'élément obturateur 16 est constitué du cordon de soudure que l'on vient réaliser entre la surface externe de l'enveloppe 9 et la tubulure 15a.

## Revendications

1. Système thermochimique du type comportant un réacteur (1), ou enceinte de stockage d'un produit réactif apte à absorber un gaz, qui est admis dans le réacteur par un diffuseur (17,17') disposé suivant l'axe longitudinal (xx') de celui-ci, le produit réactif (2) et le gaz étant tels que, lorsqu'ils sont mis en présence l'un de l'autre ils sont l'objet d'une réaction chimique ayant pour effet l'absorption du gaz par le produit réactif (2) et, à l'inverse, ils sont l'objet d'une réaction chimique inverse de désorption du gaz absorbé par le produit réactif (2) sous l'effet d'un chauffage appliqué à ce dernier lorsqu'il a absorbé du gaz, **caractérisé en ce que** le diffuseur (17,17') comprend des moyens d'alimentation en gaz (15a), des moyens de distribution du gaz (15b,19) dans le produit réactif (2), des moyens de filtration (17b,17c), et des moyens de chauffage (17a,19), ces différents moyens formant un sous-ensemble qui est fixé sur l'enveloppe (9) du réacteur (1) par un élément obturateur (16).

2. Système thermochimique suivant la revendication 1 **caractérisé en ce que** la forme et le volume dudit sous-ensemble sont tels qu'il est apte à être introduit dans le réacteur par un orifice (8) qui est obturable par l'élément obturateur (16), une fois l'introduction effectuée.

3. Système thermochimique suivant la revendication 2 **caractérisé, en ce que** ledit sous-ensemble a une forme globale cylindrique et le diamètre maximal des différents moyens constituant le sous-ensemble est inférieure à celui de l'élément obturateur (16).

4. Système thermochimique suivant l'une des revendications précédentes **caractérisé en ce que** l'élément obturateur (16) est fixé de façon amovible sur l'enveloppe (9) du réacteur.

5. Système thermochimique suivant l'une des revendications précédentes **caractérisé en ce que** le diffuseur (17,17') traverse de part en part le produit réactif (2).

6. Système thermochimique suivant l'une des revendications précédentes **caractérisé en ce que** les moyens de chauffage sont constitués par les moyens de distribution (19) du diffuseur (17').

7. Système thermochimique suivant la revendication 6 **caractérisé en ce que** les moyens de distribution du diffuseur formant les moyens de chauffage sont constitués d'un élément filaire rigide chauffant spiralé (19), notamment en acier inoxydable, qui est alimenté en gaz à l'une de ses extrémités par une tubulure d'arrivée de gaz (15a) .

8. Système thermochimique suivant la revendication 7 **caractérisé en ce que** l'extrémité alimentée en gaz de l'élément filaire (19) est solidarisée de la tubulure (15) d'alimentation en gaz, notamment par soudure ou par un emmanchement à force.

9. Système thermochimique suivant l'une des revendications 1 à 5 **caractérisé en ce que** les moyens de chauffage sont constitués d'au moins une résistance (17a), notamment enroulée de façon sensiblement hélicoïdale sur les moyens de distribution (15b) du diffuseur (17).

10. Système thermochimique suivant l'une des revendications précédentes **caractérisé en ce que** les moyens de distribution (15b) du diffuseur sont recouverts d'au moins un filtre (17b,17c), notamment en acier inoxydable.

11. Système thermochimique suivant la revendication 10 **caractérisé en ce que** la taille des mailles dudit filtre (17b,17c) est de l'ordre de la dizaine de micromètres.

12. Système thermochimique suivant la revendication 10 **caractérisé en ce que** la taille des mailles dudit filtre est de l'ordre de la centaine de micromètres.

13. Système thermochimique suivant l'une des revendications précédentes **caractérisé en ce que** la surface interne de l'enveloppe (9) est doublée d'une seconde enceinte contenant le produit réactif (2).

14. Système thermochimique suivant l'une des revendications précédentes **caractérisé en ce que** les moyens filtrant (17b,17c) enveloppent complètement les moyens de distribution du gaz (15b,19).

15. Système thermochimique suivant l'une des revendications précédentes **caractérisé en ce qu'**il comporte des moyens de mise en communication contrôlée (5) du réacteur (1) avec un réservoir (4), contenant ledit gaz sous forme liquéfiée.

## Patentansprüche

1. Thermochemisches System des Typs, der einen Reaktor (1) oder Behälter für die Aufbewahrung eines reaktiven Produkts, das ein Gas absorbieren kann, das in den Reaktor durch einen Diffusor (17, 17'), der entlang seiner Längsachse (xx') angeordnet ist, eingelassen wird, umfasst, wobei das reaktive Produkt (2) und das Gas derart sind, dass sie, wenn sie miteinander zusammengebracht werden, einer chemischen Reaktion unterliegen, die die Wirkung hat, dass das Gas durch das reaktive Produkt (2) absorbiert wird, und dass sie umgekehrt einer umgekehrten chemischen Reaktion unterliegen, bei der das durch das reaktive Produkt (2) absorbierte Gas unter der Wirkung einer Erwärmung, die auf dieses Letztere ausgeübt wird, wenn es das Gas absorbiert hat, desorbiert wird, **dadurch gekennzeichnet, dass** der Diffusor (17, 17') Gasversorgungsmittel (15a), Mittel (15b, 19) zum Verteilen des Gases in dem reaktiven Produkt (2), Filtrierungsmittel (17b, 17c) und Heizmittel (17a, 19) umfasst, wobei diese verschiedenen Mittel eine Unteranordnung bilden, die an der Hülle (9) des Reaktors (1) durch ein Verschlusselement (16) befestigt ist.

2. Thermochemisches System nach Anspruch 1, **dadurch gekennzeichnet, dass** die Form und das Volumen der Unteranordnung derart sind, dass sie in den Reaktor durch eine Öffnung (8) eingeführt werden kann, die durch das Verschlusselement (16) verschlossen werden kann, sobald die Einführung erfolgt ist.

3. Thermochemisches System nach Anspruch 2, **dadurch gekennzeichnet, dass** die Unteranordnung eine im Allgemeinen zylindrische Form hat und der maximale Durchmesser der verschiedenen Mittel, die die Unteranordnung bilden, kleiner ist als jener des Verschlusselements (16).

4. Thermochemisches System nach einem der vorhergehenden Ansprüche, **dadurch gekennzeichnet, dass** das Verschlusselement (16) an der Hülle (9) des Reaktors abnehmbar befestigt ist.

5. Thermochemisches System nach einem der vorhergehenden Ansprüche, **dadurch gekennzeichnet, dass** der Diffusor (17, 17') das reaktive Produkt (2) von einer Seite zur anderen durchquert.

6. Thermochemisches System nach einem der vorhergehenden Ansprüche, **dadurch gekennzeichnet, dass** die Heizmittel durch die Verteilungsmittel (19) des Diffusors (17') gebildet sind.

7. Thermochemisches System nach Anspruch 6, **dadurch gekennzeichnet, dass** die Verteilungsmittel des Diffusors, die die Heizmittel bilden, durch ein spiralförmiges starres Heizdrahtelement (19) insbesondere aus Edelstahl, das an einem seiner Enden durch eine Gaseinlassröhre (15a) mit Gas versorgt wird, gebildet sind.

8. Thermochemisches System nach Anspruch 7, **dadurch gekennzeichnet, dass** das mit Gas versorgte Ende des Drahtelements (19) an der Gasversorgungsröhre (15) insbesondere durch Schweißen oder durch Eintreiben mit Kraft befestigt ist.

9. Thermochemisches Systeme einem der Ansprüche 1 bis 5, **dadurch gekennzeichnet, dass** die Heizmittel aus wenigstens einem Widerstand (17a) gebildet sind, der insbesondere im Wesentlichen schraubenlinienförmig auf die Verteilungsmittel (15b) des Diffusors (17) gewickelt ist.

10. Thermochemisches Systeme einem der vorhergehenden Ansprüche, **dadurch gekennzeichnet, dass** die Verteilungsmittel (15b) des Diffusors mit wenigstens einem Filter (17b, 17c), insbesondere aus Edelstahl, augedeckt sind.

11. Thermochemisches System nach Anspruch 10, **dadurch gekennzeichnet, dass** die Größe der Maschen des Filters (17b, 17c) in der Größenordnung von etwa 10 µm liegt.

12. Thermochemisches System nach Anspruch 10, **dadurch gekennzeichnet, dass** die Größe der Maschen des Filters in der Größenordnung von etwa 100 µm liegt.

13. Thermochemisches System nach einem der vorhergehenden Ansprüche, **dadurch gekennzeichnet, dass** die innere Oberfläche der Hülle (9) durch einen zweiten Behälter, der das reaktive Produkt (2) enthält, aufgedoppelt ist.

14. Thermochemisches System nach einem der vorhergehenden Ansprüche, **dadurch gekennzeichnet, dass** die Filtermittel (17b, 17c) die Gasverteilungsmittel (15b, 19) vollständig umschließen.

15. Thermochemisches System nach einem der vorhergehenden Ansprüche, **dadurch gekennzeichnet, dass** es Mittel umfasst, die eine gesteuerte Verbindung (5) zwischen dem Reaktor (1) und einem Vorratsbehälter (4), der das Gas in verflüssigter Form enthält, bereitstellen.

## Claims

1. Thermochemical system of the type comprising a reactor (1), or chamber for storing a reactive product capable of absorbing a gas, which is admitted into the reactor via a diffuser (17, 17') positioned along the longitudinal axis (xx') thereof, the reactive product (2) and the gas being such that, when they are brought into contact with one another, they are subjected to a chemical reaction that results in the absorption of the gas by the reactive product (2) and, conversely, they are subjected to a reverse chemical reaction of desorption of the gas absorbed by the reactive product (2) under the effect of heating applied to the latter when it has absorbed gas, **characterized in that** the diffuser (17, 17') comprises means for supplying with gas (15a), means for dispensing the gas (15b, 19) in the reactive product (2), filtration means (17b, 17c), and heating means (17a, 19), these various means forming a sub-assembly that is attached to the shell (9) of the reactor (1) by a sealing element (16).

2. Thermochemical system according to Claim 1, **characterized in that** the shape and volume of said sub-assembly are such that it is capable of being introduced into the reactor through an orifice (8) that can be sealed by the sealing element (16), once the introduction has been carried out.

3. Thermochemical system according to Claim 2, **characterized in that** said sub-assembly has an overall cylindrical shape and the maximum diameter of the various means constituting the sub-assembly is less than that of the sealing element (16).

4. Thermochemical system according to one of the preceding claims, **characterized in that** the sealing element (16) is removably attached to the shell (9) of the reactor.

5. Thermochemical system according to one of the preceding claims, **characterized in that** the diffuser (17, 17') passes right through the reactive product (2) .

6. Thermochemical system according to one of the preceding claims, **characterized in that** the heating means consist of the dispensing means (19) of the diffuser (17').

7. Thermochemical system according to Claim 6, **characterized in that** the dispensing means of the diffuser that form the heating means consist of a rigid coiled heating wire element (19), especially made of stainless steel, which is supplied with gas at one of its ends through a gas inlet pipe (15a).

8. Thermochemical system according to Claim 7, **characterized in that** the end of the wire element (19) supplied with gas is firmly attached to the gas supply pipe (15), especially by welding or by push fitting.

9. Thermochemical system according to one of Claims 1 to 5, **characterized in that** the heating means consist of at least one resistor (17a), especially wound substantially helically around the dispensing means (15b) of the diffuser (17).

10. Thermochemical system according to one of the preceding claims, **characterized in that** the dispensing means (15b) of the diffuser are covered with at least one filter (17b, 17c), especially made of stainless steel.

11. Thermochemical system according to Claim 10, **characterized in that** the mesh size of said filter (17b, 17c) is of the order of around ten micrometers.

12. Thermochemical system according to Claim 10, **characterized in that** the mesh size of said filter is of the order of around a hundred micrometers.

13. Thermochemical system according to one of the preceding claims, **characterized in that** the inner surface area of the shell (9) is doubled by a second chamber containing the reactive product (2).

14. Thermochemical system according to one of the preceding claims, **characterized in that** the filtering means (17b, 17c) completely cover the gas dispensing means (15b, 19).

15. Thermochemical system according to one of the preceding claims, **characterized in that** it comprises means (5) for placing the reactor (1) in controlled communication with a tank (4), containing said gas in liquefied form.
